# EUROPEAN PATENT SPECIFICATION

(11) **EP 4 071 607 B1**
(45) Date of publication and mention of the grant of the patent: **19.06.2024**
(21) Application number: 20895935.3
(22) Date of filing: 27.11.2020
(51) Int. Cl.: G06F 9/451, G06F 3/0482, G06F 3/0488

(54) **METHOD FOR SHARING APPLICATION, ELECTRONIC APPARATUS, AND COMPUTER READABLE STORAGE MEDIUM**
VERFAHREN ZUM GEMEINSAMEN NUTZEN VON ANWENDUNGEN, ELEKTRONISCHES GERÄT UND COMPUTERLESBARES SPEICHERMEDIUM
PROCÉDÉ DE PARTAGE D'APPLICATION, APPAREIL ÉLECTRONIQUE ET SUPPORT DE STOCKAGE LISIBLE PAR ORDINATEUR

(30) Priority: 02.12.2019 CN 201911211016
(43) Date of publication of application: 12.10.2022
(73) Proprietor: Vivo Mobile Communication Co., Ltd., Dongguan, Guangdong 523863 (CN)
(72) Inventor: QI, Shuangcheng, Dongguan, Guangdong 523863 (CN)
(74) Representative: Lavoix
(86) International application number: PCT/CN2020/132068
(87) International publication number: WO 2021/109925

(56) References cited:
- WO-A1-2018/205786
- CN-A- 106 453 538
- CN-A- 108 173 944
- CN-A- 110 248 022
- CN-A- 110 515 579
- CN-A- 111 045 772
- CN-A- 111 092 990
- CN-A- 111 124 706
- CN-A- 111 432 070
- US-A1- 2006 136 828
- US-A1- 2006 161 623
- US-A1- 2015 339 090
- Jake Peterson: "YouTube 101: How to Cast Videos to Your TV « Smartphones :: Gadget Hacks", , 7 November 2017 (2017-11-07), XP055707514, Retrieved from the Internet: URL:https://smartphones.gadgethacks.com/ho w-to/youtube-101-cast-videos-your-tv-01786 53/ [retrieved on 2020-06-22]

## Description

### TECHNICAL FIELD

The present application relates to the technical field of communication, and in particular, to an application sharing method, an electronic device and a computer readable storage medium.

### BACKGROUND

With the rapid development of the computer technology, the functions of electronic devices are becoming more and more richer, and the demand for sharing functions among different electronic devices is stronger and stronger. For example, application sharing is a common sharing demand.

CN110515579 A discloses a screen casting method, applied to a terminal, which includes: displaying a user interface of a first application; when a screen casting instruction with respect to the first application is received, casting the user interface of the first application on a screen of another terminal for display; and displaying a homepage user interface, and shrinking the user interface of the first application and displaying the shrunk user interface of the first application through a floating window.

At present, the common application sharing manner among the electronic devices is remote control through remote control software, that is, two electronic devices can be connected through a remote control application, and one device control the desktop of the other device. At this time, the applications on the desktop can be viewed, so that the application in one device is shared to the other device for use. However, in the above sharing process, the device sharing the application is controlled by the other device, and the device cannot be operated, resulting in low utilization rate of the device.

### SUMMARY

Embodiments of the present application provide an application sharing method, an electronic device, a computer readable storage medium, and a computer program product as defined in the appended set of claims, so as to solve the problem of low utilization rate of devices in the application sharing process in the prior art.

The application sharing method according to the embodiments of the present application, the virtual screen is created in the background, and a to-be-shared application runs in the background virtual screen after being started. At this time, a user still can perform other operations on the first electronic device, for example, related operations on other applications and other functional operations. An operation by the user on the first electronic device is not affected by first application sharing, wherein the first application is the target application. It can be understood that in the process that the first electronic device shares the to-be-shared application, since the to-be-shared application runs in the virtual screen created in the background, other functions of the first electronic device are not affected, and a user still can perform operation on the first electronic device, so that the utilization rate of the first electronic device can be increased.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a first flowchart of an application sharing method according to an embodiment of the present application;
FIG. 2 is a first interface diagram of a first electronic device according to an embodiment of the present application;
FIG. 3 is a first interface diagram of a second electronic device according to an embodiment of the present application;
FIG. 4 is a second interface diagram of a first electronic device according to an embodiment of the present application;
FIG. 5 is a second interface diagram of a second electronic device according to an embodiment of the present application;
FIG. 6 is a third interface diagram of a first electronic device according to an embodiment of the present application;
FIG. 7 is a third interface diagram of a second electronic device according to an embodiment of the present application;
FIG. 8 is a fourth interface diagram of a first electronic device according to an embodiment of the present application;
FIG. 9 is a fourth interface diagram of a second electronic device according to an embodiment of the present application;
FIG. 10 is a first schematic diagram of an electronic device according to an embodiment of the present application; and
FIG. 11 is a schematic diagram of a hardware structure of an electronic device according to an embodiment of the present application.

### DESCRIPTION OF EMBODIMENTS

The following clearly and completely describes the technical solutions in the embodiments of the present application with reference to the accompanying drawings in the embodiments of the present application. Apparently, the described embodiments are some but not all of the embodiments of the present application.

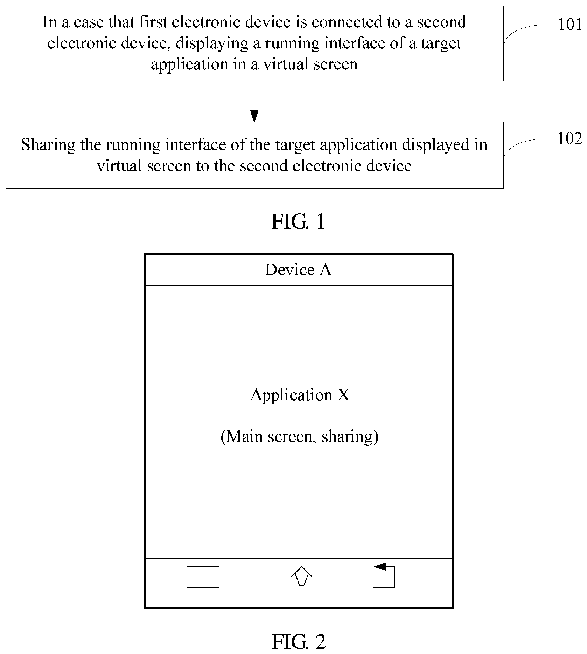

Referring to FIG. 1, in one embodiment, an application sharing method is provided and applied to a first electronic device. The method includes:

Step 101: in a case that the first electronic device is connected to a second electronic device, displaying a running interface of a target application in a virtual screen.

In the process of sharing a target application, the target application is shared to the second electronic device. In this way, it is necessary to establish connection between the first electronic device and the second electronic device, that is, in a case that the first electronic device is connected to the second electronic device, the running interface of the target application can be displayed in the virtual screen, that is, the target application still runs.

In the first electronic device, an application can be installed. For example, several applications are installed in the first electronic device. In the application sharing process, each application has its corresponding identity information, for example, an application name and the like. The identity information of the application needing to be shared can be determined from the application identity information of the several installed applications, that is, target application identity information, so that the application needing to be shared can be determined, that is, the target application. In addition, it is necessary to determine device information of a target electronic device receiving application sharing from device information of several electronic devices which can be connected to the first electronic device, that is, target device information. In addition, the application which is running on the foreground may be shared, that is, in a case that the first electronic device is connected to the second electronic device, the running interface of the target application which runs in the foreground is displayed in the virtual screen.

In one example, the target electronic device can be determined by the following manners: displaying device information of at least one second electronic device; receiving a second selection operation on target electronic device information of device information of at least one second electronic device, and determining the target electronic device, wherein the target electronic device is a device corresponding to the target electronic device information.

The second electronic device is an electronic device which can be connected to the first electronic device, and device information of at least one second electronic device can be displayed, so that it is convenient for a user to view device information of the second electronic device which can be connected to the first electronic device, for example, the device information may be a device name and the like. Then, one electronic device which receives application sharing can be selected from at least one second electronic device, and the target electronic device may be a second electronic device which is selected by a user from at least one second electronic device. The target device information can be acquired by the above process, so that the target electronic device which receives application sharing can be determined, and subsequent application sharing is facilitated. In one example, the first electronic device can be connected to the second electronic device through Bluetooth, WIFI P2P or a network server. A near terminal can realize connection through Bluetooth, wifi P2P and the like, and a far terminal can realize connection through a network server, historical connection record and the like.

Step 102: sharing the running interface of the target application displayed in the virtual screen to the second electronic device.

The virtual screen is isolated from a main screen. The running interface of a first application which is the target application is displayed in the virtual screen, that is, the running interface of the target application displayed in the virtual screen is shared to the target electronic device, and the running interface of the first application is displayed in the virtual screen, so that the first application is shared. In one example, the running interface of the target application can be coded and shared to the second electronic device so as to ensure normal transmission, and is decoded and displayed after being received by the second electronic device.

According to the application sharing method provided by the embodiments of the present application, in a case that the first electronic device is connected to the second electronic device, the running interface of the target application can be displayed in the virtual screen. At this time, a user still can perform other operations on the first electronic device, for example, related operations on other applications and other functional operations. An operation by the user on the first electronic device is not affected by target application sharing. It can be understood that in the process that the first electronic device shares the target application, since the running interface of the target application runs in the virtual screen, other functions of the first electronic device are not affected, and a user still can perform operation on the first electronic device, so that the utilization rate of the first electronic device can be increased.

In one embodiment, the step of sharing the running interface of the target application displayed in the virtual screen to the second electronic device includes:
creating a virtual screen and displaying the running interface of the target application in the virtual screen.

That is, in a case that the first electronic device is connected to the second electronic device, the virtual screen can be created firstly, and then the running interface of the target application is put into the virtual screen to run, that is, the target application still runs. At this time, a user still can perform other operations on the first electronic device, for example, related operations on other applications and other functional operations. An operation by the user on the first electronic device is not affected by target application sharing. In one example, the running interface of the target application can be switched from the foreground to the virtual screen to display. In this way, the foreground can not display the running interface any more, and power consumption is reduced.

In one embodiment, the step of creating the virtual screen and displaying the running interface of the target application in the virtual screen includes: creating a virtual screen in the background and displaying the running interface of the target application in the virtual screen.

That is, in a case that the first electronic device is connected to the target electronic device, the virtual screen can be created in the background, the virtual screen runs in the background, and the running interface of the target application is displayed in the virtual screen in the background, that is, the target application still runs. Since the virtual screen is created in the background, that is, the virtual screen runs in the background, the running interface of the target application is displayed in the virtual screen, that is, the running interface can run in the background. At this time, a user still can perform other operations on the first electronic device, for example, related operations on other applications and other functional operations. An operation by the user on the first electronic device is not affected by target application sharing.

In one embodiment, the step of sharing the running interface of the target application displayed in the virtual screen to the second electronic device includes: recording the virtual screen and recording audio in the virtual screen to acquire target data, and sharing the target data to the second electronic device, wherein the target data includes a display picture sequence and an audio sequence of the virtual screen.

In the process of sharing a display content, the virtual screen can be recorded, which can be understood that the running interface of the first application is displayed in the virtual screen, so that screen recording of the first application is realized. At the same time, the audio can also be recorded, for example, the audio in the virtual screen is recorded, so that target data is acquired. The target data includes a display picture sequence (which corresponds to a running picture, can be understood as an interface sequence obtained by recording the running interface of the target application in the virtual screen and includes a multi-frame display picture) and an audio sequence (the audio in the audio sequence can be understood as an audio related to the target application in the virtual screen and is separated from the audio of the system itself) of the virtual screen. Pictures and audios are recorded, the target data of the first application is shared, and the target electronic device plays the target data. In this way, the first application which is being used in the first electronic device is shared to the target electronic device, a user on the target electronic device can view and use the first application, the progress of both devices is synchronized, and what you see is what you get. In one example, each frame of display picture in the display picture sequence corresponds to one frame of audio, that is, the frame number of the audio in the audio sequence may be the same as the frame number of the frame display picture in the display picture sequence. In this way, picture and audio synchronization can be ensured.

In one embodiment, after sharing the running interface of the target application displayed in the virtual screen to the second electronic device, the method further includes: receiving touch data sent by the second electronic device, wherein the touch data is acquired based on a touch operation for the running interface of the target application; and based on the touch data, performing a responding operation for the touch data, and displaying an interface obtained by performing the responding operation in the virtual screen.

That is, the running interface of the shared target application is displayed on the second electronic device, and the touch operation can be performed in the running interface displayed by the second electronic device, so that the target application in the first electronic device can be controlled, what you see is what you get, the sharing content can be seen by both users at the same time, and the process is synchronized.

In one embodiment, after sharing the running interface of the target application displayed in the virtual screen to the second electronic device, the method further includes: in a case that a notification message sent by the second electronic device is received, suspending sharing of the running interface of the target application displayed in the virtual screen,
wherein the notification message is a message sent by the second electronic device in a case that a second application is switched from the foreground to the background, and the second application is used to display the running interface of the target application.

That is, in a case that the second application in the second electronic device for displaying the running interface of the target application is switched to the background, a notification message will be sent to the first electronic device, and the first electronic device can suspend sharing after receiving the notification message, so that the power consumption of the device can be reduced. In one example, the second application may also play an audio sequence shared by the first electronic device.

In one embodiment, the step of displaying the running interface of the target application displayed in the virtual screen includes:
in a case that the target application is not started, starting the target application, and displaying the running interface of the target application in the virtual screen; or
in a case that the target application runs in the foreground, putting the running interface of the target application into the virtual screen for display.

That is, the shared target application may be an application which is not started, then the target application can be started firstly, and the running interface of the target application is displayed in the virtual screen. In the first electronic device, an application can be installed. For example, several applications are installed in the first electronic device. In the application sharing process, an application needing to be shared can be determined from the several installed applications first, that is, the target application. In addition, it is necessary to determine the target electronic device which receives application sharing from several electronic devices which can be connected to the first electronic device. In addition, the shared target application may also be running on the foreground, then the running interface of the target application can be put into the virtual screen to display. That is, sharing can be realized regardless of whether the application runs or not.

The application sharing process is described specifically below with reference to one specific embodiment. The case where the first electronic device is a device A, the first application is an application X and the second electronic device is a device B is taken as an example for description.

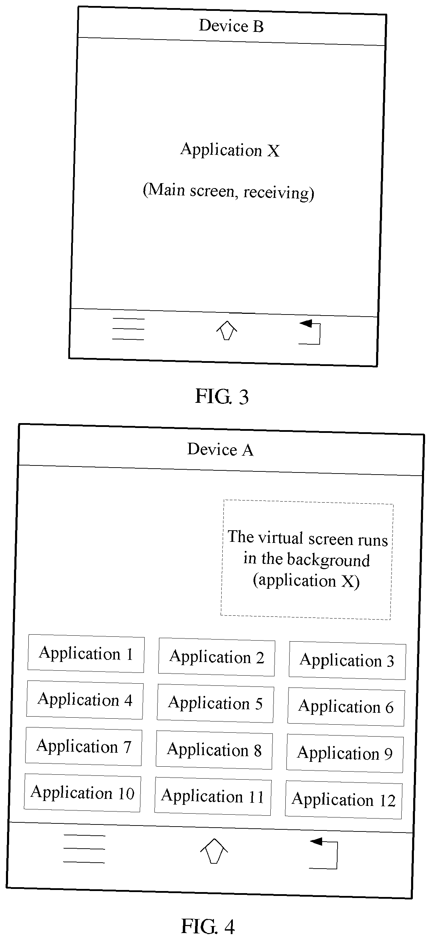

As shown in FIG. 2, the application X is shared in the device A, and the running interface of the application X is displayed in the virtual screen; furthermore, the virtual screen displays, that is, the virtual screen runs in the foreground, and the device A is sharing the application X. The running interface of the application X displayed in the virtual screen is shared to the device B, and the device B displays the running interface of the received application X. As shown in FIG. 3, the device B runs the running interface of the application X in the foreground. In addition, in the device B, the running interface of the application X can be displayed through the second application.

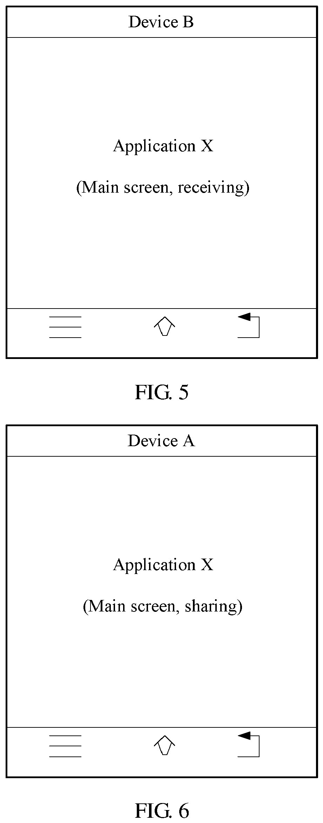

As shown in FIG. 4, the application X is shared in the device A, the running interface of the application X is displayed in the virtual screen, and the virtual screen runs in the background and is sharing the application X. The running interface of the application X displayed in the virtual screen is shared to the device B, and the device B displays the running interface of the received application X. As shown in FIG. 5, the device B runs the running interface of the application X in the foreground.

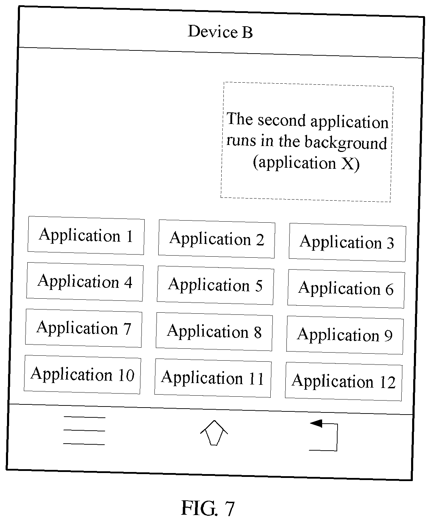

As shown in FIG. 6, the application X is shared in the device A, and the running interface of the application X is displayed in the virtual screen; furthermore, the virtual screen displays, that is, the virtual screen runs in the foreground and is sharing the application X. The running picture of the application X displayed in the virtual screen is shared to the device B. After the device B receives the running interface of the application X, the running interface of the application X can be displayed through the second application which runs in the background, as shown in FIG. 7. Since the second application runs in the background, a notification message can be sent to the device A, and the device A suspends sharing.

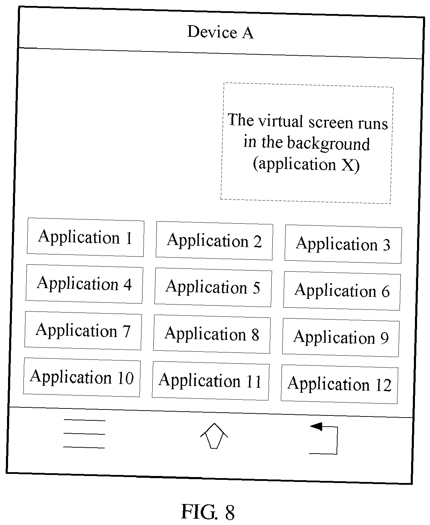

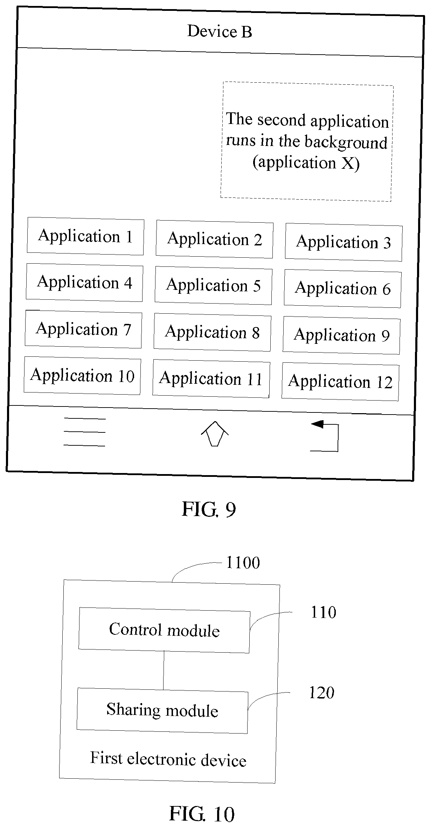

As shown in FIG. 8, the application X is shared in the device A, and the running interface of the application X is displayed in the virtual screen; furthermore, the virtual screen runs in the background and is sharing the application X, the running picture of the application X displayed in the virtual screen is shared to the device B, the device B receives the running picture of the displayed application X, and the display picture can be played through the second application. As shown in FIG. 9, the second application runs in the background, that is, the running interface of the application X is displayed through the second application which runs in the background. When the second application runs in the background, a notification message can be sent to the device A, and the device A suspends sharing.

That is, in the sharing process, the first electronic device and the second electronic device can place the sharing content (for example, the running interface of the target application) in the background to realize sharing and time-sharing use of the main screen; furthermore, the sharing will not be interrupted, and the use of the main screen of both parties does not affect each other (for the first electronic device, an activity suspending event from the system will be intercepted when the virtual screen is in the background, so that the target application still can run; and for the second electronic device, the sharing content can be displayed through one second application, the first electronic device will suspend sharing when the second electronic device runs in the background, and at this time, the second electronic device will not synthesize the content displayed by the first electronic device).

In addition, there may be a plurality of second electronic devices, and the sharing process can be realized through a virtual screen technology, an audio separation technology, a touch detection technology, a screen multi-focus technology, and a device connection and data transmission technology. One-to-many connection can be performed, so that the first electronic device can share the same application to different second electronic devices at the same time, or may also share different applications to different devices respectively. That is, the first electronic device may share the running interface of the same application to different second electronic devices, or may also share the running interfaces of different applications to different second electronic devices respectively. Furthermore, sharing may cross platforms (because the target application also runs locally), the second electronic device only needs to install a second application and can decode videos, monitor input and display, and application and function sharing among different platforms (for example, an android platform and an ios platform) can be realized. By an audio separation technology, the audio of the target application for displaying the running interface in the virtual screen in the first electronic device can be separated from the audio of a non-target application. In this way, the audio of the target application in the virtual screen can be independently recorded to obtain an audio sequence, and the audio sequence is transmitted to the second electronic device.

By the application sharing method provided by the above embodiment, the first electronic device can share the running interface of the target application to the second electronic device, both the devices can view and use a to-be-shared application at the same time, the progress of the two devices is synchronized, and what you see is what you get. Furthermore, the use of other applications on the device is not affected in the sharing process, the functions of other applications may be realized in a case that sharing is not interrupted, and the shared to-be-shared application may return to the foreground to run at any time, that is, so that the experience of an application receiving party can be ensured, it will not affect the application sharing party to complete other works on the first electronic device, the behavior logic is natural and efficient, and the utilization rate of the device can be increased.

In one example, the first electronic device and the second electronic device may be but not limited to a mobile phone, a table personal computer (Tablet Personal Computer), a laptop computer (Laptop Computer), a personal digital assistant (personal digital assistant, PDA), a mobile Internet device (Mobile Internet Device, MID) or a wearable device (Wearable Device).

Referring to FIG. 10, in one embodiment, a first electronic device 1100 of an embodiment is further provided. The first electronic device 1100 includes:
a control module 110, configured to: in a case that the first electronic device is connected to a second electronic device, display a running interface of a target application in a virtual screen; and
a sharing module 120, configured to share the running interface of the target application displayed in the virtual screen to the second electronic device.

In one embodiment, the sharing module is configured to record the virtual screen and record audio in the virtual screen to acquire target data, and share the target data to the second electronic device, wherein the target data includes a display picture sequence and an audio sequence of the virtual screen.

In one embodiment, the first electronic device further includes:
a touch data receiving module, configured to receive touch data sent by the second electronic device, wherein the touch data is acquired based on a touch operation for the running interface of the target application; and
a performing module, configured to: based on the touch data, perform a responding operation for the touch data, and display an interface obtained by performing the responding operation in the virtual screen.

In one embodiment, the electronic device further includes:
a suspending module, configured to: in a case that a notification message sent by the second electronic device is received, suspend sharing of the running interface of the target application displayed in the virtual screen,
wherein the notification message is a message sent by the second electronic device in a case that a second application is switched from the foreground to the background, and the second application is used to display the running interface of the target application.

In one embodiment, the control module is configured to: in a case that the target application is not started, start the target application, and display the running interface of the target application in the virtual screen; or
in a case that the target application runs in the foreground, put the running interface of the target application into the virtual screen for display.

The technical feature of the electronic device provided by the embodiments of the present application corresponds to the technical feature of the application sharing method. Each process of the application sharing method is implemented by the electronic device, and a same effect can be achieved. To avoid repetition, details are described herein again.

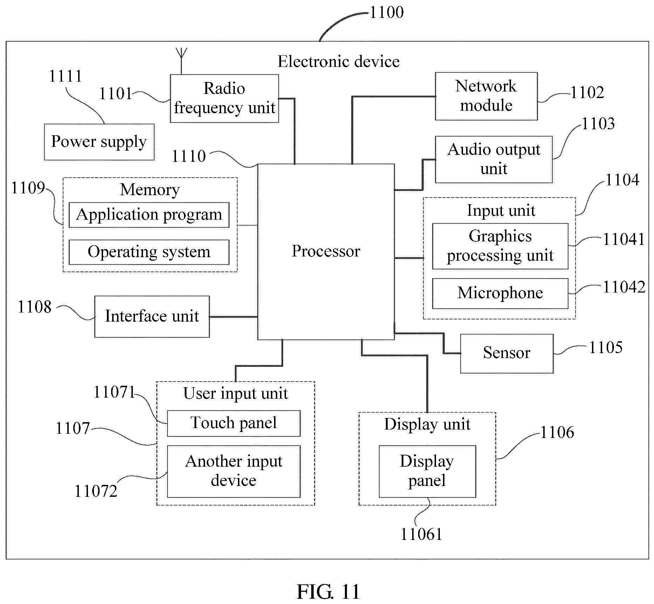

FIG. 11 is a schematic diagram of a hardware structure of an electronic device according to each embodiment of the present application. The electronic device 1100 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, a power supply 1111 and the other components. A person skilled in the art may understand that the structure of the electronic device shown in FIG. 11 constitutes no limitation on the electronic device. The electronic device may include more or fewer components than those shown in the figure, or a combination of some components, or an arrangement of different components. In the embodiments of the present application, the electronic device includes, but is not limited to a mobile phone, a tablet personal computer, a notebook computer, a palmtop computer, a vehicle-mounted terminal, a wearable device, a pedometer, or the like.

The processor 1110 is configured to: in a case that the first electronic device is connected to a second electronic device, display a running interface of a target application in a virtual screen; and
share the running interface of the target application displayed in the virtual screen to the second electronic device.

In the process that the first electronic device shares the to-be-shared application, since of the target application runs in the virtual screen, other functions of the first electronic device are not affected, and a user still can perform operation on the first electronic device, so that the utilization rate of the first electronic device can be increased.

It should be understood that, in the embodiments of the present application, the radio frequency unit 1101 may be configured to receive and transmit information, or receive and transmit signals during a call. Specifically, the radio frequency unit 1101 receives downlink data from a base station, and transmits the downlink data to the processor 1110 for processing; and in addition, transmits uplink data to the base station. Generally, the radio frequency unit 1101 includes, but is not limited to, an antenna, at least one amplifier, a transceiver, a coupler, a low noise amplifier, a duplexer, and the like. In addition, the radio frequency unit 1101 may also communicate with a network and other devices through a wireless communication system.

The electronic device provides users with wireless broadband Internet access through the network module 1102, for example, helps users receive and send e-mails, browse web pages, and access streaming media.

The audio output unit 1103 may convert audio data received by the radio frequency unit 1101 or the network module 1102 or stored in the memory 1109 into an audio signal and output the audio signal as a sound. Moreover, the audio output unit 1103 can further provide audio output related to a specific function performed the electronic device 1100 (for example, call signal receiving sound and message receiving sound). The audio output unit 1103 includes a speaker, a buzzer, a telephone receiver, and the like.

The input unit 1104 is configured to receive audio or radio frequency signals. The input unit 1104 may include a graphics processing unit (Graphics Processing Unit, GPU) 11041 and a microphone 11042. The graphics processing unit 11041 processes image data of a static image or a video obtained by an image capturing electronic device (for example, a camera) in a video capturing mode or an image capturing mode. A processed image frame may be displayed on the display unit 1106. The image frame processed by the graphics processing unit 11041 may be stored in the memory 1109 (or another storage medium) or sent by using the radio frequency unit 1101 or the network module 1102. The microphone 11042 may receive sound and can process such sound into audio data.

The audio data obtained through processing may be converted, in a telephone call mode, into a format that may be sent to a mobile communication base station via the radio frequency unit 1101 for output.

The electronic device 1100 further includes at least one sensor 1105, for example, a light sensor, a motion sensor, and another sensor. Specifically, the light sensor includes an ambient light sensor and a proximity sensor. The ambient light sensor may adjust brightness of a display panel 11061 according to ambient light brightness. The proximity sensor may switch off the display panel 11061 and/or backlight when the electronic device 1100 moves close to an ear. As a motion sensor, an accelerometer sensor may detect magnitude of acceleration in various directions (usually three axes), may detect magnitude and the direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 1105 may further include a fingerprint sensor, a pressure sensor, an iris sensor, a molecular sensor, a gyroscope, a barometer, a hygrometer, a thermometer, an infrared sensor, or the like. Details are not described herein again.

The display unit 1106 is configured to display information entered by the user or information provided for the user. The display unit 1106 may include a display panel 11061. The display panel 11061 may be configured in a form of a liquid crystal display (LCD), an organic light-emitting diode (OLED), or the like.

The user input unit 1107 may be configured to receive entered number or character information, and generate key signal input related to user settings and function control of the electronic device. Specifically, the user input unit 1107 includes a touch panel 11071 and another input device 11072. The touch panel 11071, also called a touch screen, may collect touch operation on or near the touch panel by users (for example, operation on the touch panel 11071 or near the touch panel 11071 by fingers or any suitable objects or accessories such as a touch pen by the users). The touch panel 11071 may include two parts: a touch detection electronic device and a touch controller. The touch detection electronic device detects a touch orientation of the user, detects a signal brought by the touch operation, and sends the signal to the touch controller. The touch controller receives touch information from the touch detection electronic device, converts the touch information into touch point coordinates, sends the touch point coordinates to the processor 1110, and receives and executes a command sent by the processor 1110. In addition, the touch panel 11071 may be implemented by various types such as a resistive type, a capacitive type, an infrared ray type or a surface acoustic wave type. In addition to the touch panel 11071, the user input unit 1107 may further include other input devices 11072. Specifically, the another input device 11072 may include but is not limited to: a physical keyboard, a function button (such as a volume control button, a switch button), a trackball, a mouse, and a joystick, which is not described herein.

Further, the touch panel 11071 may cover the display panel 11061. When detecting a touch operation on or near the touch panel 11071, the touch panel 11071 transmits the touch operation to the processor 1110 to determine a type of a touch event. Then, the processor 1110 provides corresponding visual output on the display panel 11061 based on the type of the touch event. Although in FIG. 11, the touch panel 11071 and the display panel 11061 are configured as two independent components to implement input and output functions of the electronic device, in some embodiments, the touch panel 11071 and the display panel 11061 can be integrated to implement the input and output functions of the electronic device. Details are not limited herein.

The interface unit 1108 is an interface for connecting an external electronic device with the electronic device 1100. For example, the external electronic device may include a wired or wireless headphone port, an external power supply (or a battery charger) port, a wired or wireless data port, a storage card port, a port used to connect to an electronic device having an identity module, an audio input/output (I/O) port, a video I/O port, a headset port, and the like. The interface unit 1108 may be configured to receive input (for example, data information and power) from an external electronic device and transmit the received input to one or more elements in the electronic device 1100 or may be configured to transmit data between the electronic device 1100 and an external electronic device.

The memory 1109 may be configured to store a software program and various pieces of data. The memory 1109 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 1109 may include a high-speed random access memory or a nonvolatile memory, for example, at least one disk storage device, a flash memory, or other non-volatile solid-state storage devices.

The processor 1110 is a control center of the electronic device and connects all parts of the electronic device using various interfaces and circuits. By running or executing software programs and/or modules stored in the memory 1109 and by calling data stored in the memory 1109, the processor 1110 implements various functions of the electronic device and processes data, thus performing overall monitoring on the electronic device. The processor 1110 may include one or more processing units. Optionally, the processor 1110 may integrate an application processor and a modem processor. The application processor mainly deals with an operating system, a user interface, an application, and the like. The modem processor mainly deals with wireless communication. It can be understood that the foregoing modem processor may not be integrated into the processor 1110.

The electronic device 1100 may further include the power supply 1111 (for example, a battery) supplying power to various components. Preferably, the power supply 1111 may be logically connected to the processor 1110 through a power management system, so as to implement functions such as managing charging, discharging, and power consumption through the power management system.

In addition, the electronic device 1100 includes some functional modules not shown. Details are not described herein again.

The embodiments of the present application further provide an electronic device, including a processor 1110 and a memory 1109, wherein the memory 1109 stores a computer program capable of running on the processor 1110; when the computer program is executed by the processor 1110, each process of the application sharing method embodiments is implemented; and a same technical effect can be achieved. To avoid repetition, details are described herein again.

The embodiments of the present application further provide a computer-readable storage medium. The computer-readable storage medium stores a computer program; when the computer program is executed by a processor, the foregoing processes of the foregoing application sharing method embodiments are implemented; and a same technical effect can be achieved. To avoid repetition, details are not described herein again. The computer-readable storage medium is a read-only memory (Read-Only Memory, ROM), a random access memory (Random Access Memory, RAM), a magnetic disk, an optical disc, or the like.

It can be understood that the embodiments described in some embodiments of the present application may be implemented by hardware, software, firmware, middleware, a microcode, or a combination thereof. For implementation with hardware, the module, unit, submodule, subunit, and the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

It should be noted that terms "including", "comprising" or any other variants thereof are intended to cover non-exclusive inclusion, so that a process, method, article or device including a series of elements includes not only those elements but also other elements not explicitly listed, or elements inherent to such a process, method, article, or device. Without more restrictions, an element defined by the phrase "including a ..." does not exclude the presence of another same element in a process, method, article, or electronic device that includes the element.

Based on the descriptions of the foregoing implementations, a person skilled in the art may clearly understand that the method in the foregoing embodiments may be implemented by software in addition to a necessary universal hardware platform or by hardware only. In most circumstances, the former is a preferred implementation. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing an electronic device (which may be a mobile phone, a computer, a server, an air conditioner, a network device, or the like) to perform the method disclosed in the embodiments of this application.

The technical features of the above embodiments may be arbitrarily combined. For brevity of description, all possible combinations of the technical features in the above embodiments are not described.

The embodiments of the present application are described above with reference to the accompanying drawings, but the present application is not limited to the foregoing specific implementations. The foregoing specific implementations are merely schematic instead of restrictive.

## Claims

1. An application sharing method, performed by a first electronic device, **characterized in that** the method comprises:
in a case that the first electronic device is connected to a second electronic device, creating, in a background of the first electronic device, a virtual screen for displaying a running interface of a target application, and displaying (101) the running interface of the target application in the virtual screen, to allow a user to perform other operations on the first electronic device; and
sharing (102) the running interface of the target application displayed in the virtual screen to the second electronic device;
wherein after sharing the running interface of the target application displayed in the virtual screen to the second electronic device, the method further comprises:
in a case that a notification message sent by the second electronic device is received, suspending sharing of the running interface of the target application displayed in the virtual screen,
wherein the notification message is a message sent by the second electronic device in a case that a second application is switched from a foreground to a background of the second electronic device, and the second application is used to display the running interface of the target application.

2. The method according to claim 1, wherein the step of sharing the running interface of the target application displayed in the virtual screen to the second electronic device comprises:
recording the virtual screen and recording audio in the virtual screen to acquire target data, and sharing the target data to the second electronic device, wherein the target data comprises a display picture sequence and an audio sequence of the virtual screen.

3. The method according to claim 1, wherein after sharing the running interface of the target application displayed in the virtual screen to the second electronic device, the method further comprises:
receiving touch data sent by the second electronic device, wherein the touch data is acquired based on a touch operation for the running interface of the target application; and
based on the touch data, performing a responding operation for the touch data, and displaying an interface obtained by performing the responding operation in the virtual screen.

4. The method according to claim 1, wherein the step of displaying the running interface of the target application in the virtual screen comprises:
in a case that the target application is not started, starting the target application, and displaying the running interface of the target application in the virtual screen; or
in a case that the target application runs in a foreground of the first electronic device, putting the running interface of the target application into the virtual screen for display.

5. A first electronic device (1100), **characterized by** comprising:
a control module (110), configured to: in a case that the first electronic device (1100) is connected to a second electronic device, create, in a background of the first electronic device, a virtual screen for displaying a running interface of a target application, and display the running interface of the target application in the virtual screen, to allow a user to perform other operations on the first electronic device;
a sharing module (120), configured to share the running interface of the target application displayed in the virtual screen to the second electronic device; and
a suspending module, configured to: in a case that a notification message sent by the second electronic device is received, suspend sharing of the running interface of the target application displayed in the virtual screen,
wherein the notification message is a message sent by the second electronic device in a case that a second application is switched from a foreground to a background of the second electronic device, and the second application is used to display the running interface of the target application.

6. The first electronic device (1100) according to claim 5, wherein the sharing module (120) is configured to: record the virtual screen and record audio in the virtual screen to acquire target data, and share the target data to the second electronic device, wherein the target data comprises a display picture sequence and an audio sequence of the virtual screen.

7. The first electronic device (1100) according to claim 5, further comprising:
a touch data receiving module, configured to receive touch data sent by the second electronic device, wherein the touch data is acquired based on a touch operation for the running interface of the target application; and
a performing module, configured to: based on the touch data, perform a responding operation for the touch data, and display an interface obtained by performing the responding operation in the virtual screen.

8. The first electronic device (1100) according to claim 5, wherein the control module (110) is configured to: in a case that the target application is not started, start the target application, and display the running interface of the target application in the virtual screen; or
in a case that the target application runs in a foreground of the first electronic device, put the running interface of the target application into the virtual screen for display.

9. A computer readable storage medium, **characterized in that** the computer readable storage medium stores a computer program; and when the computer program is executed by a processor, the steps of the application sharing method according to any one of claims 1-4 are implemented.

10. A computer program product, **characterized in that** the computer program product is stored in a non-volatile storage medium; and the program product is executed by at least one processor to implement the steps of the application sending method according to any one of claims 1-4.

## Patentansprüche

1. Verfahren zur gemeinsamen Nutzung von Anwendungen, das von einer ersten elektronischen Vorrichtung durchgeführt wird, **dadurch gekennzeichnet, dass** das Verfahren Folgendes umfasst:
in einem Fall, in dem die erste elektronische Vorrichtung mit einer zweiten elektronischen Vorrichtung verbunden ist, Erzeugen eines virtuellen Bildschirms in einem Hintergrund der ersten elektronischen Vorrichtung zum Anzeigen einer laufenden Schnittstelle einer Zielanwendung und Anzeigen (101) der laufenden Schnittstelle der Zielanwendung in dem virtuellen Bildschirm, um einem Benutzer zu ermöglichen, andere Operationen auf der ersten elektronischen Vorrichtung durchzuführen; und
Freigabe (102) der laufenden Schnittstelle der Zielanwendung, die auf dem virtuellen Bildschirm angezeigt wird, an die zweite elektronische Vorrichtung;
wobei das Verfahren nach der Freigabe der laufenden Schnittstelle der auf dem virtuellen Bildschirm angezeigten Zielanwendung für die zweite elektronische Vorrichtung weiterhin umfasst:
in dem Fall, dass eine von der zweiten elektronischen Vorrichtung gesendete Benachrichtigungsnachricht empfangen wird, die Freigabe der laufenden Schnittstelle der auf dem virtuellen Bildschirm angezeigten Zielanwendung auszusetzen,
wobei die Benachrichtigungsnachricht eine Nachricht ist, die von der zweiten elektronischen Vorrichtung in einem Fall gesendet wird, in dem eine zweite Anwendung von einem Vordergrund zu einem Hintergrund der zweiten elektronischen Vorrichtung umgeschaltet wird, und die zweite Anwendung verwendet wird, um die laufende Schnittstelle der Zielanwendung anzuzeigen.

2. Verfahren nach Anspruch 1, wobei der Schritt der Freigabe der laufenden Schnittstelle der Zielanwendung, die auf dem virtuellen Bildschirm angezeigt wird, an die zweite elektronische Vorrichtung umfasst:
Aufzeichnen des virtuellen Bildschirms und Aufzeichnen von Audio auf dem virtuellen Bildschirm, um Zieldaten zu erfassen, und Freigabe der Zieldaten an die zweite elektronische Vorrichtung, wobei die Zieldaten eine Anzeigebildsequenz und eine Audiosequenz des virtuellen Bildschirms umfassen.

3. Verfahren nach Anspruch 1, wobei das Verfahren nach der Freigabe der laufenden Schnittstelle der Zielanwendung, die auf dem virtuellen Bildschirm angezeigt wird, an die zweite elektronische Vorrichtung weiterhin umfasst:
Empfangen von Berührungsdaten, die von der zweiten elektronischen Vorrichtung gesendet werden, wobei die Berührungsdaten basierend auf einer Berührungsoperation für die laufende Schnittstelle der Zielanwendung erfasst werden; und
basierend auf den Berührungsdaten, Ausführen eines Antwortvorgangs für die Berührungsdaten und Anzeigen einer Schnittstelle, die durch Ausführen des Antwortvorgangs auf dem virtuellen Bildschirm erhalten wird.

4. Verfahren nach Anspruch 1, wobei der Schritt des Anzeigens der laufenden Schnittstelle der Zielanwendung auf dem virtuellen Bildschirm umfasst:
in einem Fall, in dem die Zielanwendung nicht gestartet ist, das Starten der Zielanwendung und das Anzeigen der laufenden Schnittstelle der Zielanwendung auf dem virtuellen Bildschirm; oder
in dem Fall, in dem die Zielanwendung im Vordergrund der ersten elektronischen Vorrichtung läuft, die laufende Schnittstelle der Zielanwendung zur Anzeige auf den virtuellen Bildschirm bringen.

5. Erste elektronische Vorrichtung (1100), **dadurch gekennzeichnet, dass** sie Folgendes umfasst:
ein Steuermodul (110), das so konfiguriert ist, dass es: in einem Fall, in dem die erste elektronische Vorrichtung (1100) mit einer zweiten elektronischen Vorrichtung verbunden ist, in einem Hintergrund der ersten elektronischen Vorrichtung einen virtuellen Bildschirm zum Anzeigen einer laufenden Schnittstelle einer Zielanwendung erzeugt und die laufende Schnittstelle der Zielanwendung in dem virtuellen Bildschirm anzeigt, um einem Benutzer zu ermöglichen, andere Operationen auf der ersten elektronischen Vorrichtung durchzuführen;
ein Freigabemodul (120), das so konfiguriert ist, dass es die laufende Schnittstelle der auf dem virtuellen Bildschirm angezeigten Zielanwendung für die zweite elektronische Vorrichtung freigibt; und
ein Aussetzungsmodul, das so konfiguriert ist, dass es: in einem Fall, in dem eine von der zweiten elektronischen Vorrichtung gesendete Benachrichtigungsnachricht empfangen wird, die gemeinsame Nutzung der laufenden Schnittstelle der auf dem virtuellen Bildschirm angezeigten Zielanwendung aussetzt,
wobei die Benachrichtigungsnachricht eine Nachricht ist, die von der zweiten elektronischen Vorrichtung in einem Fall gesendet wird, in dem eine zweite Anwendung von einem Vordergrund zu einem Hintergrund der zweiten elektronischen Vorrichtung umgeschaltet wird, und die zweite Anwendung verwendet wird, um die laufende Schnittstelle der Zielanwendung anzuzeigen.

6. Die erste elektronische Vorrichtung (1100) nach Anspruch 5, wobei das Freigabemodul (120) konfiguriert ist, um: den virtuellen Bildschirm aufzuzeichnen und Audio auf dem virtuellen Bildschirm aufzuzeichnen, um Zieldaten zu erfassen, und die Zieldaten an die zweite elektronische Vorrichtung weiterzugeben, wobei die Zieldaten eine Anzeigebildsequenz und eine Audiosequenz des virtuellen Bildschirms umfassen.

7. Erste elektronische Vorrichtung (1100) nach Anspruch 5, ferner umfassend:
ein Berührungsdaten-Empfangsmodul, das so konfiguriert ist, dass es von der zweiten elektronischen Vorrichtung gesendete Berührungsdaten empfängt, wobei die Berührungsdaten auf der Grundlage einer Berührungsoperation für die laufende Schnittstelle der Zielanwendung erfasst werden; und
ein Durchführungsmodul, das so konfiguriert ist, dass es: auf der Grundlage der Berührungsdaten einen Antwortvorgang für die Berührungsdaten durchführt und eine Schnittstelle anzeigt, die durch die Durchführung des Antwortvorgangs auf dem virtuellen Bildschirm erhalten wird.

8. Erste elektronische Vorrichtung (1100) nach Anspruch 5, wobei das Steuermodul (110) so konfiguriert ist, dass es: in einem Fall, in dem die Zielanwendung nicht gestartet ist, die Zielanwendung startet und die laufende Schnittstelle der Zielanwendung auf dem virtuellen Bildschirm anzeigt; oder
in einem Fall, in dem die Zielanwendung im Vordergrund der ersten elektronischen Vorrichtung läuft, die laufende Schnittstelle der Zielanwendung auf dem virtuellen Bildschirm zur Anzeige bringt.

9. Computerlesbares Speichermedium, wobei das computerlesbare Speichermedium ein Computerprogramm speichert und, wenn das Computerprogramm von einem Prozessor ausgeführt wird, die Schritte des Verfahrens zur gemeinsamen Nutzung einer Anwendung gemäß einem der Ansprüche 1 bis 4 implementiert werden.

10. Computerprogrammprodukt, **dadurch gekennzeichnet, dass** das Computerprogrammprodukt in einem nichtflüchtigen Speichermedium gespeichert ist; und das Programmprodukt von mindestens einem Prozessor ausgeführt wird, um die Schritte des Anwendungssendeverfahrens nach einem der Ansprüche 1-4 zu implementieren.

## Revendications

1. Procédé de partage d'application, exécuté par un premier dispositif électronique, **caractérisé en ce que** le procédé comprend :
dans le cas où le premier dispositif électronique est connecté à un second dispositif électronique, la création, en arrière-plan du premier dispositif électronique, d'un écran virtuel pour afficher une interface d'exécution d'une application cible, et l'affichage (101) de l'interface d'exécution de l'application cible dans l'écran virtuel, pour permettre à un utilisateur d'effectuer d'autres opérations sur le premier dispositif électronique ; et
le partage (102) de l'interface d'exécution de l'application cible affichée sur l'écran virtuel avec le deuxième dispositif électronique ;
dans lequel, après le partage de l'interface d'exécution de l'application cible affichée sur l'écran virtuel avec le deuxième dispositif électronique, le procédé comprend en outre :
en cas de réception d'un message de notification envoyé par le deuxième dispositif électronique, la suspension du partage de l'interface en cours d'exécution de l'application cible affichée sur l'écran virtuel,
dans lequel le message de notification est un message envoyé par le deuxième dispositif électronique lorsqu'une deuxième application passe de l'avant-plan à l'arrière-plan du deuxième dispositif électronique et que la deuxième application est utilisée pour afficher l'interface d'exécution de l'application cible.

2. Procédé selon la revendication 1, dans lequel l'étape de partage de l'interface d'exécution de l'application cible affichée sur l'écran virtuel avec le deuxième dispositif électronique comprend :
l'enregistrement de l'écran virtuel et l'enregistrement audio dans l'écran virtuel pour acquérir des données cibles, et le partage des données cibles avec le second dispositif électronique, dans lequel les données cibles comprenant une séquence d'images d'affichage et une séquence audio de l'écran virtuel.

3. Procédé selon la revendication 1, dans lequel après le partage de l'interface d'exécution de l'application cible affichée sur l'écran virtuel avec le deuxième dispositif électronique, le procédé comprend en outre :
la réception des données tactiles envoyées par le second dispositif électronique, dans lequel les données tactiles sont acquises sur la base d'une opération tactile pour l'interface en cours d'exécution de l'application cible ; et
en fonction des données tactiles, la réception d'une opération de réponse pour les données tactiles, et l'affichage d'une interface obtenue en effectuant l'opération de réponse dans l'écran virtuel.

4. Procédé selon la revendication 1, dans lequel l'étape de partage de l'interface d'exécution de l'application cible affichée sur l'écran virtuel comprend :
dans le cas où l'application cible n'est pas démarrée, démarrer l'application cible et afficher l'interface d'exécution de l'application cible sur l'écran virtuel ; ou
dans le cas où l'application cible s'exécute en avant-plan du premier dispositif électronique, afficher l'interface d'exécution de l'application cible sur l'écran virtuel pour affichage.

5. Premier dispositif électrique (1100), **caractérisé en ce qu'**il comprend :
un module de commande (110) configuré pour : dans le cas où le premier dispositif électronique (1100) est connecté à un second dispositif électronique, créer, en arrière-plan du premier dispositif électronique, un écran virtuel pour afficher une interface d'exécution d'une application cible, et afficher l'interface d'exécution de l'application cible dans l'écran virtuel, pour permettre à un utilisateur d'effectuer d'autres opérations sur le premier dispositif électronique ;
un module de partage (120), configuré pour partager l'interface d'exécution de l'application cible affichée sur l'écran virtuel avec le deuxième dispositif électronique ; et
un module de suspension, configuré à : en cas de réception d'un message de notification envoyé par le deuxième dispositif électronique, la suspension du partage de l'interface en cours d'exécution de l'application cible affichée sur l'écran virtuel,
dans lequel le message de notification est un message envoyé par le deuxième dispositif électronique lorsqu'une deuxième application passe de l'avant-plan à l'arrière-plan du deuxième dispositif électronique et que la deuxième application est utilisée pour afficher l'interface d'exécution de l'application cible.

6. Premier dispositif électronique (1100) selon la revendication 5, dans lequel le module de partage (120) est configuré pour : enregistrer l'écran virtuel et l'enregistrement audio dans l'écran virtuel pour acquérir des données cibles, et partager les données cibles avec le second dispositif électronique, dans lequel les données cibles comprennent une séquence d'images d'affichage et une séquence audio de l'écran virtuel.

7. Premier dispositif électronique (1100) selon la revendication 5, comprenant en outre :
un module de réception de données tactiles, configuré pour recevoir des données tactiles envoyées par le second dispositif électronique, dans lequel les données tactiles sont acquises sur la base d'une opération tactile pour l'interface en cours d'exécution de l'application cible ; et
un module de réalisation, configuré pour : en fonction des données tactiles, l'exécution d'une opération de réponse pour les données tactiles, et l'affichage d'une interface obtenue en effectuant l'opération de réponse dans l'écran virtuel.

8. Premier dispositif électronique (1100) selon la revendication 5, dans lequel le module de commande (110) est configuré pour : dans le cas où l'application cible n'est pas démarrée, démarrer l'application cible et afficher l'interface d'exécution de l'application cible sur l'écran virtuel ; ou
dans le cas où l'application cible s'exécute en avant-plan du premier dispositif électronique, afficher l'interface d'exécution de l'application cible sur l'écran virtuel pour affichage.

9. Support de stockage lisible par ordinateur, **caractérisé en ce que** le support de stockage lisible par ordinateur stocke un programme informatique, et lorsque le programme informatique est exécuté par un processeur, les étapes du procédé de partage d'application selon l'une quelconque des revendications 1 à 4 sont mises en oeuvre.

10. Produit programme informatique, **caractérisé en ce que** le produit programme d'ordinateur est stocké dans un support de stockage non volatil ; et le produit programme est exécuté par au moins un processeur pour mettre en oeuvre les étapes du procédé d'envoi de l'application selon l'une quelconque des revendications 1 à 4.
